# EUROPEAN PATENT SPECIFICATION

(11) **EP 2 582 966 B1**
(45) Date of publication and mention of the grant of the patent: **18.06.2014**
(21) Application number: 11758267.6
(22) Date of filing: 30.08.2011
(51) Int. Cl.: F03D 1/00, F03D 9/00, F03D 11/02, F04B 1/04, F04B 53/16, F04B 1/053

(54) **RENEWABLE ENERGY TURBINE GENERATOR PROVIDED WITH HYDRAULIC PUMP WITH A SEGMENTED COVER AND METHOD TO ASSEMBLY THE PUMP**
TURBINENGENERATOR FÜR ERNEUERBARE ENERGIEN MIT HYDRAULIKPUMPE MIT EINER SEGMENTIERTEN ABDECKUNG SOWIE VERFAHREN ZUR MONTAGE DER PUMPE
GÉNÉRATEUR À TURBINE À ÉNERGIE RENOUVELABLE COMPORTANT UNE POMPE HYDRAULIQUE QUI PRÉSENTE UN COUVERCLE SEGMENTÉ, ET PROCÉDÉ POUR ASSEMBLER LA POMPE

(43) Date of publication of application: 24.04.2013
(73) Proprietor: MITSUBISHI HEAVY INDUSTRIES, Ltd., TOKYO, Tokyo 108-8215 (JP)
(72) Inventor: STEIN, Uwe, Loanhead, Midlothian EH20 9TB (GB); DODSON, Henry, Loanhead, Midlothian EH20 9TB (GB); ROBERTSON, Alasdair, Loanhead, Midlothian EH20 9TB (GB)
(74) Representative: Hindle, Alistair Andrew
(86) International application number: PCT/JP2011/004823
(87) International publication number: WO 2013/030873

(56) References cited:
- EP-A2- 2 154 368
- DE-A1- 4 318 073
- US-A- 5 657 681

## Description

### Technical Field

The invention relates to covers for pumps in renewable energy turbine generators, such as wind turbine generators (WTGs) or other energy extraction devices for generating electricity using energy received from a renewable energy source.

### Background Art

International patent application PCT/GB2011/050355 (Artemis Intelligent Power Ltd.) discloses a large pump which is easy to maintain as it includes modular blocks housing either portions of a ring cam or cylinders, which can be removed radially to facilitate access to both the ring cam and cylinders for the purposes of repair and maintenance. A cylindrical cover encompasses the pump and is removable axially. The cover is an important component not just for the protection of the internal components but, for example, to retain oil and so it must be well sealed.

However, the cover disclosed in PCT/GB2011/050355 is not a fully satisfactory cover. An axially removed cover must be slid over its seals, which runs a risk of tearing the seals and which can require a lot of force. Also, the cover may take up a lot of space when removed and there may also be additional connections, such as pipes, which prevent movement of the cover away from the body of the pump.

US 5,657,681 (Henricson) discloses a hydraulic motor which is discontinuous around its periphery. However, it does not include a cover which defines in whole or in part a peripheral chamber encircling and providing oil to the cylinders.

EP 2154368 discloses another example of a renewable energy turbine generator.

The invention aims to provide an improved cover for a hydraulic pump, which can be readily opened to allow access for maintenance and repair, but which also provides a reliable seal to retain oil.

### Summary of Invention

According to a first aspect of the invention there is provided a renewable energy turbine generator comprising:
a rotor, a generator and a hydraulic transmission which transmits rotational energy from the rotor to the generator,
the hydraulic transmission comprising a variable displacement hydraulic pump which is driven by the rotor, a variable displacement hydraulic motor which is coupled to the generator, a high pressure oil line which is arranged between a discharge side of the hydraulic pump and an intake side of the hydraulic motor, and a low pressure line which is arranged between an intake side of the hydraulic pump and a discharge side of the hydraulic motor,
wherein the hydraulic pump comprises: a plurality of working chambers each of which is defined by a cylinder and a piston slidably mounted in the cylinder, a rotatable shaft coupled to a cam, the plurality of cylinders being arranged around the rotatable shaft, the cam having a cam surface in engagement with the said pistons, the cycles of working chamber volume being coupled to rotation of the rotatable shaft, and a plurality of valves for regulating the net displacement of oil between each working chamber and the high and low pressure oil lines, at least one valve associated with each working chamber being an electronically controlled valve, said electronically controlled valves being operable by the controller to select the volume of oil displaced by each said working chamber on each cycle of working chamber volume and thereby regulate the net rate of displacement of oil by the hydraulic pump,
wherein the hydraulic pump comprises a cover extending around the cylinders, the cover comprising at least three circumferentially distributed demountable cover segments.

Preferably, each cover segment subtends an angle of no more than 120°. Preferably, each cover segment is individually demountable. Thus, the cover segments can be removed individually, allowing access to cylinders and pistons without a requirement for the entire cover to be removed. This may facilitate inspection, maintenance and repair. Although the plurality of cover segments may comprise cover segments which subtend different angles, they typically subtend the same angle.

The hydraulic pump may comprise an inward ring and an outward ring around (typically, concentric with) the inward ring. Typically, the cover extends around the periphery of the outward ring. In that case, one of the inward ring and the outward ring comprises a cam which may, for example, be a ring cam, and the other comprises a plurality of radially extending cylinders circumferentially spaced around the respective ring.

The outward ring may comprise a plurality of individually demountable blocks which are radially removable to expose a portion of the inward ring. Typically, the radially removable blocks comprise a portion of the cam or one or more of the cylinders. Preferably, the angle subtended by each of the radially removable blocks is less than the angle subtended by each of the demountable cover segments. Thus, in some embodiments the inward ring and outward ring can be inspected, repaired or maintained without removal of the entire cover.

Typically, the hydraulic pump further comprises a case including axially spaced structural members on either side of the cylinders, and a seal extending between the axially spaced structural members outward of the cylinders (around the periphery of the outward ring, where present). Thus, the seal preferably spans a gap between axially spaced structural members.

Thus, the axially spaced structural members and the seal retain oil outward of the cylinders. The seal typically comprises a continuous band around the periphery of the cylinders. The seal is preferably unitary. The seal is preferably flexible. Typically, the demountable cover segments bear on the seal, thereby retaining the seal against the axially spaced structural members. The seal is typically formed from vulcanised rubber. The seal may be formed by extruding, optionally cutting, and then vulcanising rubber. The seal may be formed from a polymeric material. The seal may comprise reinforcement, for example, the seal may be fibre-reinforced. The seal may comprise metal reinforcing elements.

In embodiments comprising a said seal, another advantage of the cover segments subtending an angle of no more than 120° is that, where the cover segments are equally-sized (for example, to facilitate manufacture and reduce the number of spare parts required), all parts of each cover segment approach the seal with a component perpendicular to the seal's surface. If the cover segments were to approach more or less parallel to the seal's surface, even over only a small distance (at the edges of the cover segments, for example if each of two cover segments extended over half of the circumference of the outward ring), then the seal would be stretched, may bunch up between the cover segments, and can become damaged.

The hydraulic pump may further comprise an oil receiving volume recessed from the periphery of the first and second axially spaced members, wherein the seal extends across the recess and retains oil within the oil receiving volume.

It may be that the demountable cover segments are each demountably fixed to the periphery of both the first and second axially spaced members. Adjacent demountable cover segments may be detachably fixed to each other. Cover segments may be detachably fixed with a continuous tension ring.

An oil receiving volume may be defined between the cylinders and the seal (and typically also the first and second axially spaced members).

It may be that the seal is flexible and defines one or more cavities intermediate the inward surface of the seal and the cover. The or each cavity may be filled with a compressible fluid, usually a gas, e.g. air. The seal may comprise the one or more cavities, for example, the one or more cavities may be formed as pockets within the seal. The cavities may extend from one junction between two cover segments to the next junction between two cover segments. One cavity may be provided underneath each cover segments.

A further seal may be provided between the said seal and the cover so that the said cavity is defined between the said seal and the further seal.

The outward facing surfaces of the axially spaced structural members may each comprise a peripheral recess or ridge and the seal comprise cooperating ridges or recesses respectively. This arrangement stops the seal from slipping into the middle of the hydraulic pump.

The cover may be circular. The demountable cover segments may be segments of a circle.

The hydraulic pump may, for example, have a mass of greater than 10 tons, or greater than 50 tons. The hydraulic pump may be mounted greater than 50m, or greater than 100m above the ground.

The renewable energy turbine generator may be a wind turbine generator comprising a turbine having a plurality of blades.

According to a second aspect of the invention there is provided a method of assembling a hydraulic pump for a renewable energy turbine generator according to the first aspect of the invention, the method comprising fitting a said seal around the periphery of the hydraulic pump and then fitting the plurality of demountable cover segments to sealedly retain the seal between the cylinders and the demountable cover segments. Further optional features of the second aspect of the invention correspond to those described above in relation to the first aspect.

### Brief Description of Drawings

An example embodiment of the invention will now be illustrated with reference to the following Figures in which:
[fig.1]Figure 1 is an isometric projection of the components of the nacelle of a wind turbine including a hydraulic pump;
[fig.2]Figure 2 is a cross-section through a hydraulic pump;

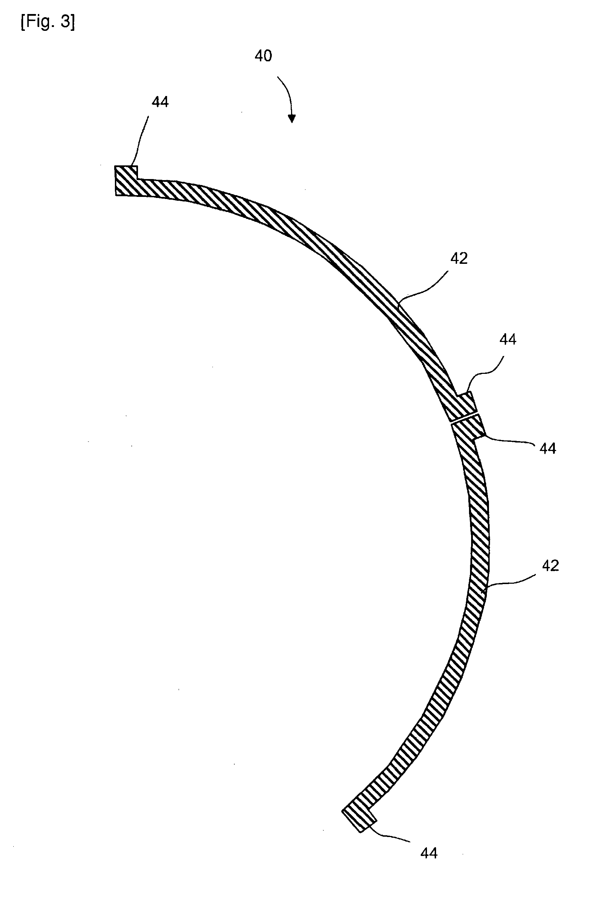

[fig.3]Figure 3 is cross-section through part of a segmented cover; and
[fig.4]Figure 4 is a cross-section through an alternative hydraulic pump.

### Description of Embodiments

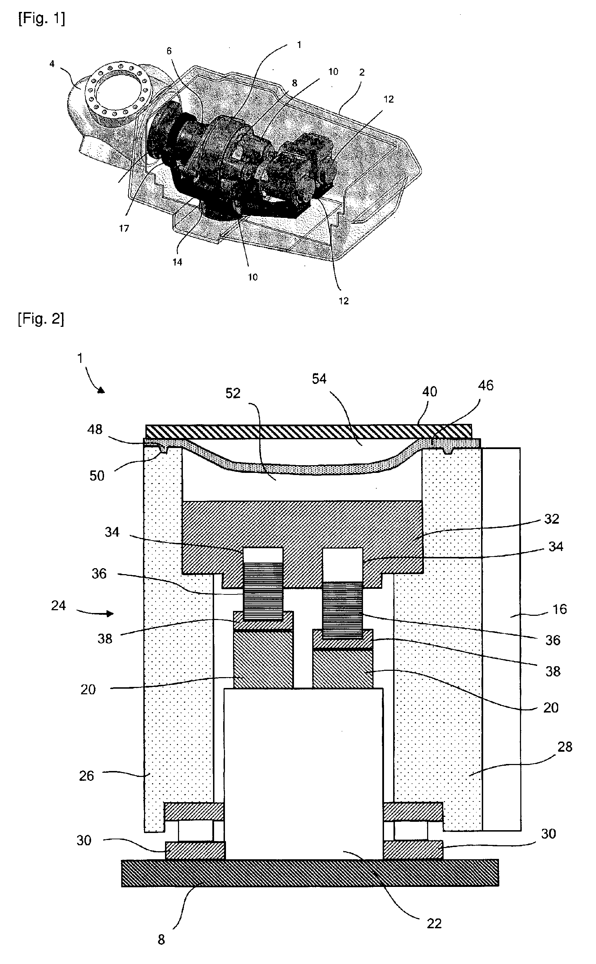

With reference to Figure 1, a variable displacement hydraulic radial piston pump 1 has a size and construction suitable for application in the nacelle 2 of a wind turbine generator, where it is driven by a turbine 4. The turbine is connected through turbine shaft 6 to the hollow drive shaft 8 of the pump. Pressurised oil from a discharge side of the pump is used to drive motors 10 which in turn drive electrical generators 12. The pump is connected to a chassis 14 through a mounting plate 16 having torque arms 18 which couple the pump to the nacelle in use, through the chassis, but which can be decoupled for maintenance.

With reference to Figure 2, the pump includes ring cam segments 20, mounted on a ring cam support 22 and thereby fixedly attached to the hollow shaft 8. The ring cam segments and ring cam support together form the inward ring. The pump includes an outward ring 24, which is demountably connected to the mounting plate, and which comprises first and second end plates 26, 28, mounted to the drive shaft through bearings 30. Between the first and second end plates there are mounted a plurality of circumferentially distributed demountable cylinder blocks 32, each of which comprises a plurality of cylinders 34. Within each cylinder a piston 36 is slideably mounted in driving engagement with the ring cam through a respective piston roller 38. A circular cover 40, shown in Figure 2, is formed from a plurality of cover segments 42, joined with flanges 44.

A ring-shaped seal 46 is fitted around the periphery of the end plates, under the cover. The seal is formed from extruded rubber, cut to length and vulcanised to form a band. The ring-shaped seal includes two inward facing peripheral ridges 48, which are fitted within peripheral grooves 50 in the outward surfaces of the end plates, to hold the seal in place. The cover clamps the edges of the seal against the end plates. The seal, end plates and demountable cylinder blocks together define a low-pressure gallery 52, which extends around the pump, and is filled with hydraulic oil which is provided to the cylinders during operation. The low pressure gallery is an oil receiving volume, recessed from the periphery of the end plates, and the seal extends across the recess and retains oil with the low pressure gallery. On the external side of the seal, the space between the cover and the seal encloses an annular air canty 54 including pressurised air and functioning as the cavity intermediate the inward surface of the seal and the cover.

During operation of the pump, the seal functions to prevent the leakage of hydraulic oil. As the seal forms a continuous band extending around the pump, a reliable seal is formed. It would be difficult to form a correspondingly reliable seal using a plurality of separate sealing members. Nevertheless, the seal can be easily removed for maintenance, or replaced when required.

In order for the seal to be removed, hydraulic oil is drained from the pump. The segments of the case are removed radially. The seal can then be removed, for example peeled back and rolled up. Maintenance may include stages such as removing one or more individual demountable blocks in a radial direction to access the ring cams. After maintenance, the seal is replaced. To fit the seal, it typically requires to be stretched over the end plates, with the peripheral ridges fitted into the peripheral grooves.

Thus, the cover, which would otherwise be unwieldy and bulky can be readily removed in several parts, and later replaced. This is particularly important when the pump is located in a wind turbine generator nacelle, which is difficult to access. However, by employing a continuous seal extending around the pump, an excellent seal can be achieved and maintained. The segments may be bolted or clamped to each other, using the flanges illustrated in Figure 2. Alternatively, or in addition, they may be bolted or clamped to the end plates.

The cover segments subtend an angle of no more than 120° (60° in the example shown). This reduces the risk of damage to the seal by limiting the angle at which the ends of the cover segments extend relative to the seal, when the seal was removed or replaced. If, for example, three cover segments were employed, each of which subtended an angle of 180°, the ends of the cover segments would move parallel to the seal when the cover segments were fitted or removed, potentially damaging the seal.

The annular air space can be filled with pressurised air, which creates a distributed low-pressure accumulator that helps to provide pulsative flow into the cylinders during operating. In this case, a fluid tight join (i.e. sufficiently fluid tight to prevent the leakage of hydraulic oil) is required between the seal and the end plates.

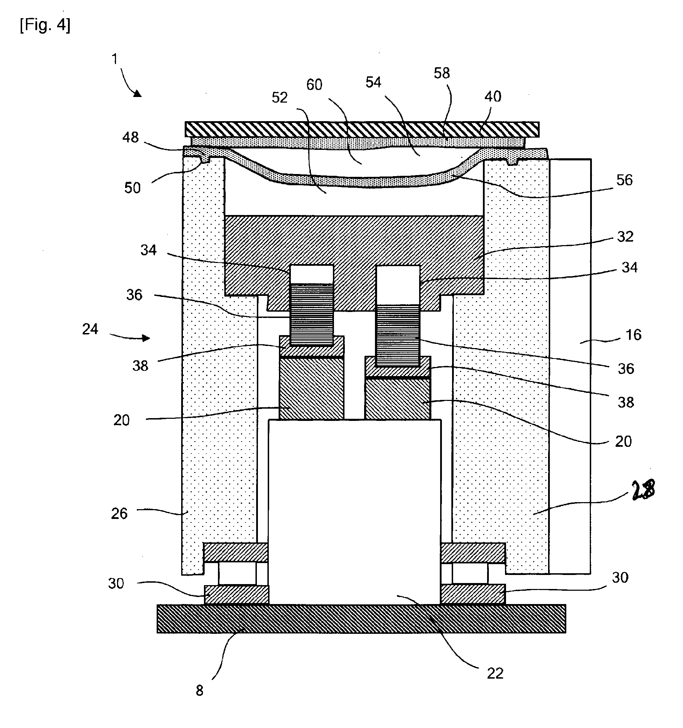

With reference to Figure 4, in some embodiments, the seal is cellular, with an inner band 56 and an outer band 58, sealed around opposite edges and also defining a plurality of separate air pockets 60 therebetween, with each air pocket underlying an individual cover segment. In this case, a fluid tight join is required between the seal and the cover segments, between the seals and the end plates, and between the inner and outer bands. The inner and outer bands may meet, and form a fluid tight configuration, at each of the flanges joining the case segments. Air pockets may also be formed within a single band.

The invention also extends to embodiments without the peripheral seal, in which selected cover segments can be removed to facilitate access to selected parts of the outward ring.

### Reference Signs List

1 Pump
2 Nacelle
4 Turbine
6 Turbine shaft
8 Drive shaft
10 Motors
12 Electrical generators
14 Chassis
16 Mounting plate
18 Torque arms
20 Ring cam segments
22 Ring cam support
24 Outward ring
26 First end plate
28 Second end plate
30 Bearings
32 Cylinder blocks
34 Cylinders
36 Piston
38 Piston roller
40 Cover
42 Cover segments
44 Flanges
46 Seal
48 Peripheral ridges
50 Peripheral acess
52 Low pressure gallery
54 Air cavieties
56 Inner band
58 Outer band
60 Air pockets

## Claims

1. A renewable energy turbine generator comprising:
a rotor, a generator and a hydraulic transmission which transmits rotational energy from the rotor to the generator (12),
the hydraulic transmission comprising a variable displacement hydraulic pump (1) which is driven by the rotor, a variable displacement hydraulic motor which is coupled to the generator, a high pressure oil line which is arranged between a discharge side of the hydraulic pump and an intake side of the hydraulic motor, and a low pressure line which is arranged between an intake side of the hydraulic pump and a discharge side of the hydraulic motor,
wherein the hydraulic pump (1) comprises: a plurality of working chambers each of which is defined by a cylinder (34) and a piston (36) slidably mounted in the cylinder, a rotatable shaft (8) coupled to a cam (20, 22), the plurality of cylinders being arranged around the rotatable shaft, the cam (20, 22) having a cam surface in engagement with the said pistons (36), the cycles of a working chamber volume being coupled to rotation of the rotatable shaft, and a plurality of valves for regulating the net displacement of oil between each working chamber and the high and low pressure oil lines, at least one valve associated with each working chamber being an electronically controlled valve, said electronically controlled valves being operable by the controller to select the volume of oil displaced by each said working chamber on each cycle of working chamber volume and thereby regulate the net rate of displacement of oil by the hydraulic pump, **characterized in that**
the hydraulic pump comprises a cover (40) extending around the cylinders, the cover (40) comprising at least three circumferentially distributed demountable cover segments (42).

2. A renewable energy turbine generator according to claim 1, wherein the hydraulic pump (1) further comprises a case including axially spaced structural members on either side of the cylinders, and a seal (46) extending between the axially spaced structural members outward of the cylinders (34).

3. A renewable energy turbine generator according to claim 2, wherein te hydraulic pump (1) further comprises an oil receiving volume recessed from the periphery of the first and second axially spaced members, wherein the seal (46) extends across the recess and retains oil within the recess.

4. A renewable energy turbine generator according to claim 2, wherein the demountable cover segments (26, 28) each demountably fixed to the periphery of both the first and second axially spaced members.

5. A renewable energy turbine generator according to claim 1, wherein adjacent demountable cover segments (42) are detachably fixed to each other.

6. A renewable energy turbine generator according to claim 1, wherein an oil receiving volume is defined between the cylinders (34) and the seal (46).

7. A renewable energy turbine generator to claim 1, wherein the seal (46) is flexible and defines one or more cavities (54) intermediate the inward surface of the seal (46) and the cover, the one or more cavities being filled with a compressible fluid.

8. A renewable energy turbine generator according to claim 7, wherein the one or more cavities are formed as pockets (60) within the seal (46).

9. A renewable energy turbine generator according to claim 1, wherein the outward facing surfaces of the axially spaced structural members each comprise a peripheral recess (50) or ridge (48) and the seal comprises co-operating ridges (48) or recesses (50) respectively.

10. A renewable energy turbine generator according to claim 1, which is a wind turbine generator comprising a turbine having a plurality of blades.

11. A method of assembling a hydraulic pump for a renewable energy turbine generator according to claim 1, the method comprising fitting a seal (46) around the periphery of the hydraulic pump and then fitting the plurality of demountable cover segments (40, 42) to sealedly retain the seal (46) between the cylinders and the demountable cover segments (42).

## Patentansprüche

1. Turbinengenerator für erneuerbare Energien, welcher Folgendes umfasst:
einen Rotor, einen Generator und ein Hydraulikgetriebe, das Rotationsenergie vom Rotor an den Generator (12) überträgt, wobei das Hydraulikgetriebe eine von dem Rotor angetriebene Hydraulik-Verstellpumpe (1), einen mit dem Generator gekoppelten Hydraulik-Verstellmotor, eine zwischen einer Auslassseite der Hydraulikpumpe und einer Ansaugseite des Hydraulikmotors angeordnete Hochdruck-Ölleitung und eine zwischen einer Ansaugseite der Hydraulikpumpe und einer Auslassseite des Hydraulikmotors angeordnete Niederdruckleitung umfasst, wobei die Hydraulikpumpe (1) Folgendes umfasst: eine Mehrzahl von Förderkammern, die jeweils definiert sind durch einen Zylinder (34) und einen Kolben (36), welcher gleitfähig in dem Zylinder angebracht ist, eine drehbare Welle (8), die mit einem Nocken (20, 22) gekoppelt ist, wobei die Mehrzahl von Zylindern rund um die drehbare Welle angeordnet ist, der Nocken (20, 22) eine Nockenoberfläche aufweist, welche sich in Eingriff mit den besagten Kolben (36) befindet, wobei die Zyklen des Förderkammervolumens an die Rotation der drehbaren Welle gekoppelt sind, und eine Mehrzahl von Ventilen, die die Nettoölverdrängung zwischen jeder Förderkammer und den Hoch- und Niederdruck-Ölleitungen regeln, wobei mindestens ein jeder Förderkammer zugeordnetes Ventil ein elektronisch angesteuertes Ventil ist, wobei die besagten elektronisch angesteuerten Ventile von der Steuerung betätigt werden können, um das Volumen des durch jede besagte Förderkammer in jedem Zyklus des Förderkammervolumens zu wählen und dadurch die Nettoölverdrängungsrate der Hydraulikpumpe zu regeln,
**dadurch gekennzeichnet, dass** die Hydraulikpumpe eine Abdeckung (40) umfasst, die sich um die Zylinder herum erstreckt, wobei die Abdeckung (40) mindestens drei um den Umfang verteilte, abnehmbare Abdeckungssegmente (42) umfasst.

2. Turbinengenerator für erneuerbare Energien nach Anspruch 1, wobei die Hydraulikpumpe (1) ferner ein Gehäuse umfasst, das axial beabstandete Strukturelemente an jeder Seite der Zylinder aufweist, und wobei sich eine Dichtung (46) zwischen den axial beabstandeten Strukturelementen auswärts der Zylinder (34) erstreckt.

3. Turbinengenerator für erneuerbare Energien nach Anspruch 2, wobei die Hydraulikpumpe (1) ferner ein Ölaufnahmevolumen umfasst, das aus der Peripherie der ersten und zweiten axial beabstandeten Elemente ausgespart ist, wobei sich die Dichtung (46) über die Aussparung erstreckt und Öl in der Aussparung zurückhält.

4. Turbinengenerator für erneuerbare Energien nach Anspruch 2, wobei die abnehmbaren Abdeckungssegmente (26, 28) jeweils abnehmbar an der Peripherie sowohl des ersten als auch des zweiten axial beabstandeten Elements angebracht sind.

5. Turbinengenerator für erneuerbare Energien nach Anspruch 1, wobei benachbarte, abnehmbare Abdeckungssegmente (42) lösbar aneinander befestigt sind.

6. Turbinengenerator für erneuerbare Energien nach Anspruch 1, wobei ein Ölaufnahmevolumen zwischen den Zylindern (34) und der Dichtung (46) definiert ist.

7. Turbinengenerator für erneuerbare Energien nach Anspruch 1, wobei die Dichtung (46) flexibel ist und einen Hohlraum oder mehrere Hohlräume (54) zwischen der Innenfläche der Dichtung (46) und der Abdeckung definiert, wobei der eine Hohlraum/die mehreren Hohlräume mit einem verdichtbaren Fluid gefüllt ist/sind.

8. Turbinengenerator für erneuerbare Energien nach Anspruch 7, wobei der eine Hohlraum/die mehreren Hohlräume als Taschen (60) in der Dichtung (46) ausgebildet ist/sind.

9. Turbinengenerator für erneuerbare Energien nach Anspruch 1, wobei die auswärts weisenden Flächen der axial beabstandeten Strukturelemente jeweils eine periphere Aussparung (50) oder Kante (48) umfassen und die Dichtung damit zusammenwirkende Kanten (48) bzw. Aussparungen (50) umfasst.

10. Turbinengenerator für erneuerbare Energien nach Anspruch 1, der ein Windturbinengenerator ist und eine Turbine mit einer Mehrzahl von Rotorblättern umfasst.

11. Verfahren zum Montieren einer Hydraulikpumpe für einen Turbinengenerator für erneuerbare Energien nach Anspruch 1, wobei das Verfahren umfasst, eine Dichtung (46) rund um die Peripherie der Hydraulikpumpe anzubringen und anschließend die Mehrzahl von abnehmbaren Abdeckungssegmenten (40, 42) anzubringen, um die Dichtung (46) dicht zwischen den Zylindern und den abnehmbaren Abdeckungssegmenten (42) zu halten.

## Revendications

1. Générateur à turbine à énergie renouvelable comportant :
un rotor, un générateur et une transmission hydraulique qui transmet une énergie de rotation du rotor au générateur (12),
la transmission hydraulique comportant une pompe hydraulique (1) à cylindrée variable qui est entraînée par le rotor, un moteur hydraulique à cylindrée variable qui est couplé au générateur, une canalisation d'huile à haute pression qui est disposée entre un côté refoulement de la pompe hydraulique et un côté admission du moteur hydraulique, et une canalisation à basse pression qui est disposée entre un côté admission de la pompe hydraulique et un côté refoulement du moteur hydraulique,
la pompe hydraulique (1) comportant : une pluralité de chambres de travail dont chacune est définie par un cylindre (34) et un piston (36) monté de façon coulissante dans le cylindre, un arbre tournant (8) couplé à une came (20,22), la pluralité de cylindres étant disposée autour de l'arbre tournant, la came (20,22) présentant une surface de came en interaction avec lesdits pistons (36), les cycles de volume des chambres de travail étant couplés à la rotation de l'arbre tournant, et une pluralité de soupapes servant à réguler le déplacement net d'huile entre chaque chambre de travail et les canalisations d'huile à haute et basse pression, au moins une soupape associée à chaque chambre de travail étant une soupape à commande électronique, lesdites soupapes à commande électronique pouvant être actionnées par le régulateur pour sélectionner le volume d'huile déplacé par chacune desdites chambres de travail sur chaque cycle de volume des chambres de travail et réguler ainsi le débit net de déplacement d'huile par la pompe hydraulique,
**caractérisé en ce que** la pompe hydraulique comporte un couvercle (40) s'étendant autour des cylindres, le couvercle (40) comportant au moins trois segments démontables (42) de couvercle répartis circonférentiellement.

2. Générateur à turbine à énergie renouvelable selon la revendication 1, la pompe hydraulique (1) comportant en outre un carter comprenant des éléments structuraux espacés axialement de chaque côté des cylindres, et un joint (46) s'étendant entre les éléments structuraux espacés axialement au-delà des cylindres (34).

3. Générateur à turbine à énergie renouvelable selon la revendication 2, la pompe hydraulique (1) comportant en outre un volume de réception d'huile en retrait par rapport à la périphérie des premiers et deuxièmes éléments espacés axialement, le joint (46) s'étendant en travers de l'évidement et retenant de l'huile à l'intérieur de l'évidement.

4. Générateur à turbine à énergie renouvelable selon la revendication 2, chacun des segments démontables (26, 28) de couvercle étant fixé de façon démontable à la périphérie des premiers et deuxièmes éléments espacés axialement.

5. Générateur à turbine à énergie renouvelable selon la revendication 1, des segments démontables (42) de couvercle adjacents étant fixés de façon détachable l'un à l'autre.

6. Générateur à turbine à énergie renouvelable selon la revendication 1, un volume de réception d'huile étant défini entre les cylindres (34) et le joint (46).

7. Générateur à turbine à énergie renouvelable selon la revendication 1, le joint (46) étant souple et définissant une ou plusieurs cavités (54) en position intermédiaire entre la surface intérieure du joint (46) et le couvercle, la ou les cavités étant remplies d'un fluide compressible.

8. Générateur à turbine à énergie renouvelable selon la revendication 7, la ou les cavités étant formées comme des poches (60) à l'intérieur du joint (46).

9. Générateur à turbine à énergie renouvelable selon la revendication 1, chacune des surfaces tournées vers l'extérieur des éléments structuraux espacés axialement comportant un évidement (50) ou une nervure (48) périphérique et le joint comportant respectivement des nervures (48) ou des évidements (50) en coopération.

10. Générateur à turbine à énergie renouvelable selon la revendication 1, celui-ci étant un générateur à éolienne comportant une turbine dotée d'une pluralité de pales.

11. Procédé d'assemblage d'une pompe hydraulique pour générateur à turbine à énergie renouvelable selon la revendication 1, le procédé comportant les étapes consistant à installer un joint (46) autour de la périphérie de la pompe hydraulique, puis à installer la pluralité de segments démontables (40, 42) de couvercle pour retenir de façon étanche le joint (46) entre les cylindres et les segments démontables (42) de couvercle.
